# EUROPÄISCHE PATENTSCHRIFT

(11) **EP 1 427 617 B1**
(45) Veröffentlichungstag und Bekanntmachung des Hinweises auf die Patenterteilung: **11.07.2012**
(21) Anmeldenummer: 02774567.8
(22) Anmeldetag: 05.09.2002
(51) Int. Cl.: B60T 7/04, B60T 8/32

(54) **VERFAHREN ZUR DURCHFÜHRUNG EINES AUTOMATISCHEN BREMSVORGANGS**
METHOD FOR CARRYING OUT AN AUTOMATIC BRAKING ACTION
PROCEDE PERMETTANT DE REALISER UNE OPERATION AUTOMATIQUE DE FREINAGE

(30) Priorität: 07.09.2001 DE 10144049
(43) Veröffentlichungstag der Anmeldung: 16.06.2004
(73) Patentinhaber: Continental Teves AG & Co. oHG, 60488 Frankfurt (DE); Volkswagen Aktiengesellschaft, 38440 Wolfsburg (DE)
(72) Erfinder: RIETH, Peter, 65343 Eltville (DE); BAYER, Ronald, 63165 Mühlheim/Main (DE); EBERZ, Thomas, 60487 Frankfurt/Main (DE); ECKERT, Alfred, 55129 Mainz-Hechtsheim (DE); DRUMM, Stefan, 55291 Saulheim (DE); LANDAU, Kurt, 64347 Griesheim (DE); ABENDROTH, Bettina, 64859 Eppertshausen (DE); BENDER, Eva, 64354 Reinheim (DE); NEUMANN, Markus, 64846 Gross-Zimmern (DE); WEISSE, Jochen, 64319 Pfungstadt (DE); BERG, Knut, 64646 Heppenheim (DE); RISCHBIETER, Frank, 38165 Lehre (DE); MAUS, Dieter, 31248 Hohenhameln (DE); TIEMANN, Jörg, 38154 Königslutter (DE)
(86) Internationale Anmeldenummer: PCT/EP2002/009930
(87) Internationale Veröffentlichungsnummer: WO 2003/022648

(56) Entgegenhaltungen:
- WO-A-98/15441
- DE-A- 10 060 498
- DE-A- 19 734 567
- DE-A- 19 735 687

## Beschreibung

Die vorliegende Erfindung betrifft ein Verfahren zur Durchführung eines automatischen Bremsvorgangs, bei dem wenigstens eine die Betätigung des Bremspedals repräsentierende Größe ermittelt wird und ein automatischer Bremsvorgang dann ausgelöst wird, wenn mindestens ein Grenzwert (Bremspedalbetätigungs-Grenzwert) der die Betätigung des Bremspedals repräsentierenden Größe überschritten wird.

Systeme zum Durchführen bzw. Auslösen eines automatischen Bremsvorgangs von Kraftfahrzeugen werden als Bremsassistenz-Systeme oder kurz als "Bremsassistent" bezeichnet. Der Bremsassistent unterstützt den Fahrer beim Abbremsen des Fahrzeugs in Gefahr- bzw. Notbremssituationen. Zur Realisierung eines kurzen Bremsweges ist es notwendig, den Bremsdruck möglichst rasch zu erhöhen. Es hat sich aber gezeigt, dass durchschnittliche Fahrer (Normalfahrer) in Notbremssituationen den erforderlichen maximalen Bremsdruck oft nicht oder nur verzögert über das Bremspedal einsteuern können. Sobald eine Notbremssituation vom Bremsassistenten erkannt wird, stellt das System daher schnellstmöglich den vollen Bremsdruck ein, falls der Fahrer zu zaghaft reagiert.

Der heute meist eingesetzte elektronische Bremsassistent ermöglicht eine Bremsunterstützung auf Basis eines Vakuum-Bremskraftverstärkers (Boosters) mit einem elektrisch aktivierbaren Magnetventil zur Belüftung der Arbeitskammer. Das bekannte Bremsassistenz-System analysiert über den Membranweg des Boosters jede vom Fahrer durch einen Tritt aufs Bremspedal bewirkte Bremspedalbewegung. Erreicht die daraus abgeleitete Betätigungsgeschwindigkeit eine Schwelle, wird das Magnetventil elektrisch betätigt und dadurch die maximale aussteuerbare Bremskraftverstärkung eingestellt. Diese Zusatzkraft wird zurückgenommen, wenn der Fahrer keine Kraft mehr auf das Bremspedal ausübt, was in der Regel mit Hilfe eines Löseschalters detektiert wird, und wenn eine vorbestimmte Zeit seit dem Beginn des aktiven Bremseingriffs verstrichen ist.

Eine andere Möglichkeit zur Realisierung einer Bremsassistentenfunktion bietet sich in Systemen an, die eine aktive Druckerhöhung durch Fremdansteuerung von hydraulischen Komponenten des Systems, insbesondere einer elektrischen Pumpe, ermöglichen. Eine panikartige Bremspedalbetätigung des Fahrers wird anhand der Signale eines Drucksensors in einem Hauptbremszylinder (THZ) erkannt. Bei Überschreiten eines kritischen Druckanstiegs wird durch Ansteuerung der Pumpe hydraulischer (zusätzlicher) Druck erzeugt und der Fahrer beim Bremsen aktiv unterstützt.

Diese Bremsassistenz-Systeme können aber erst auf eine Notbremssituation schließen, wenn die Bremspedalgeschwindigkeit eine festgelegte, vorgegebene Schwelle überschreitet.

Aus der gattungsbildenden DE 197 34 567 A1 ist eine Vorrichtung zum Ansteuern einer Kraftfahrzeugbremsanlage bekannt, die einen Gaspedalsensor, einen Bremspedalsensor und eine Steuereinheit mit einem Zeiterfassungsglied aufweist. Mit dem Zeiterfassungsglied erfaßt die Steuereinheit eine Zeitdauer T, die zwischen einer von dem Gaspedalsensor erfaßten Nullstellung des Gaspedals und einer von dem Bremspedalsensor erfaßten Betätigung des Bremspedals verstreicht, und beeinflußt den Bremsvorgang der Kraftfahrzeugbremsanlage in Abhängigkeit von der erfaßten Zeitdauer T.

Die WO 98/15441 A1 offenbart eine Bremsvorrichtung eines ein Gaspedal sowie ein Bremspedal aufweisenden Fahrzeugs mit einem Bremssteuersystem zum automatischen Auslösen eines Bremsvorgangs in Abhängigkeit von einem mit Hilfe einer Erfassungseinrichtung ermittelten vorgegebenen Mindestgeschwindigkeit der Bewegung des Fahrerfußes, wobei die Erfassungseinrichtung einen im Bereich zwischen Gas- und Bremspedal positionierten ersten Sensor zum Erfassen des Fahrerfußes aufweist, der Mittel zum unmittelbaren Messen der Geschwindigkeit einer Fahrerfußbewegung in Richtung Bremspedal besitzt. Vorzugsweise sind Mittel zum Ermitteln einer Betätigungsgeschwindigkeit bzw. -kraft des Bremspedals vorgesehen, wobei während eines Bremsmanövers der automatische Bremsvorgang dann ausgelöst wird, wenn die Betätigungsgeschwindigkeit bzw. -kraft des Bremspedals einen vorgegebenen Schwellenwert übersteigt. Weiterhin wird ein Verfahren zum Betrieb der Bremsvorrichtung definiert.

Aufgabe der Erfindung ist es, das Verfahren zum Betreiben eines Bremsassistenz-Systems zu verbessern und eine möglichst frühzeitige Erkennung einer Notbremssituation bei gleichzeitig hoher Erkennungssicherheit sowie einen raschen und effektiven Bremsdruckaufbau zu ermöglichen.

Die Aufgabe wird durch die Merkmale des unabhängigen Patentanspruchs gelöst. Bevorzugte Ausgestaltungen sind in den abhängigen Unteransprüchen angegeben.

Die Aufgabe wird dadurch gelöst, dass bei einem Bremsassistenz-Verfahren, bei dem mindestens eine die Betätigung bzw. Bewegung des Bremspedals repräsentierende Größe ermittelt wird und ein automatischer Bremsvorgang dann ausgelöst wird, wenn mindestens ein Bremspedalbetätigungs-Grenzwert der die Betätigung des Bremspedals repräsentierenden Größe überschritten wird. Es ist für die Erfindung wesentlich, dass der Bremspedalbetätigungs-Grenzwert variabel ist bzw. die die Bremspedalbetätigung repräsentierende Größe gewichtet wird. Der Bremspedalbetätigungs-Grenzwert wird dabei erfindungsgemäß verändert und/oder die die Bremspedalbetätigung repräsentierende Größe wird entsprechend gewichtet nach Maßgabe einer vor dem betrachteten Bremsvorgang erfassten Fahrerfußbewegung.

Erfindungsgemäß wird die vor der eigentlichen Betätigung des Bremspedals des jeweils betrachteten Bremsvorgangs und/oder die vor dem betrachteten Bremsvorgang herrschende Situation mit berücksichtigt, indem mindestens ein zuvor durchgeführter "normaler" Bremsvorgang analysiert und berücksichtigt wird. Der Bremspedalbetätigungs-Grenzwert wird erfindungsgemäß verändert und/oder die die Bremspedalbetätigung repräsentierende Größe wird entsprechend gewichtet nach Maßgabe eines individuellen Pedalbetätigungsverhaltens, welches auf Grundlage mindestens einer die Bremspedalbewegung repräsentierenden Größe, vorzugsweise zumindest anhand der Bremspedalgeschwindigkeit, festgestellt wird, wobei diese Größe bei zumindest einer, vorzugsweise mehreren, zuvor (vor dem betrachteten Bremsvorgang) durchgeführten "Normalbremsungen", d.h. nicht Vollbremsungen, ermittelt wurde.

Durch das erfindungsgemäße Verfahren kann vorteilhaft eine frühestmögliche Anpassung für ein Auslösekriterium für eine automatische Vollbremsung erfolgen.

Durch den Bremsassistenten wird dann ein erhöhter oder maximaler Bremsdruck eingestellt, wenn die Gefahr- oder Notbremssituationen bzw. ein Fahrerwunsch nach einer maximalen Verzögerung und/oder eine kritische Fahrsituation erkannt wurde. Diese gilt beim Überschreiten eines oder mehrerer Bremspedalbetätigungs-Grenzwerte (oder Bremspedalbewegungs-Grenzwerte) als erkannt. Durch die erfindungsgemäße Veränderung des Grenzwerts oder eine Gewichtung der ermittelten Bremspedalbetätigung (oder Bremspedalbewegung) ist es im Sinne der Erfindung möglich, im Auslösekriterium für eine automatische Vollbremsung die vor Betätigung des Bremspedals herrschende Situation mit zu berücksichtigen.

Nach der Erfindung ist es vorgesehen, dass als Bremspedalbetätigungs-Grenzwert eine bestimmte Bremspedalkraft, ein Bremspedalweg, eine Bremspedalgeschwindigkeit und/oder eine Bremspedalbeschleunigung, vorzugsweise eine bestimmte Bremspedalgeschwindigkeit oder eine davon abgeleitete Größe, verwendet wird. Es hat sich gezeigt, dass diese Größen der Bremspedalbewegung bzw. der Bremspedalbetätigung vorteilhaft relativ sichere Kriterien zum Erkennen einer Gefahr- oder Notbremssituationen bzw. eines Fahrerwunsches nach einer maximalen Verzögerung und/oder einer kritischen Fahrsituation darstellen.

Vorzugsweise wird als Bremspedalbewegungs-Grenzwert eine bestimmte Bremspedalgeschwindigkeit und/oder eine davon abgeleitete Größe verwendet, und als Bremspedalgeschwindigkeits-Grenzwert wird insbesondere eine Betätigungsgeschwindigkeit des Bremspedals von größer 50 mm/s, vorzugsweise größer 150 mm/s, vorgegeben. Mit diesen Grenzwerten ist eine frühzeitige und sichere Abgrenzung einer Notbremsung von einer unkritischen "gewöhnlichen" Bremsung möglich. Dabei wird vorteilhaft eine Bremspedalwegabhängigkeit der Bremspedalgeschwindigkeit oder der davon abgeleiteten Größe mit berücksichtigt.

Erfindungsgemäß ist es vorgesehen, dass mindestens ein Bremspedalbetätigungs-Grenzwert verändert wird nach Maßgabe mindestens einer Fahreraktion, insbesondere Fahrerfußbewegung, vor Berührung des Bremspedals. Durch eine Veränderung des Grenzwerts bzw. Gewichtung der die Bremspedalbetätigung repräsentierenden Größe ist der Bremsassistent zu einem sehr frühen Zeitpunkt an eine eventuell vorliegende Notbremssituation anpassbar.

Nach der Erfindung ist es vorgesehen, dass mindestens ein Bremspedalbetätigungs-Grenzwert nach Maßgabe mindestens einer erfassten Fahrpedalbetätigung, insbesondere einer Fahrpedalrückziehgeschwindigkeit, einer Fahrpedalbeschleunigung, einem Fahrpedalruck, einer Fahrpedalleistung und/oder einer Fahrpedalleistungsänderung, verändert wird. Es hat sich gezeigt, dass diese Fahrpedalbetätigung brauchbare Kriterien für eine eventuelle Gefahr- oder Notbremssituationen bzw. einen Fahrerwunsch nach einer maximalen Verzögerung und/oder eine kritische Fahrsituation darstellen.

Der Bremspedalbetätigungs-Grenzwert wird erfindungsgemäß verändert, wenn eine Fahrpedal-Rückziehgeschwindigkeit größer 20 mm/s, vorzugsweise größer 50 mm/s, eine Fahrpedalbeschleunigung größer 500 mm/s², vorzugsweise größer 1500 mm/s², ein Fahrpedalruck größer 20000 mm/s³, vorzugsweise größer 100000 mm/s³, eine Fahrpedalleistung größer 100000 mm²/s³ und/oder eine Fahrpedalleistungsänderung größer 100000000 mm²/s⁴ erfasst wurde. Es wurde gefunden, dass durch diese Grenzwerte ein früher Hinweis auf eine mögliche Voll- oder Notbremsung gegeben ist.

Nach der Erfindung ist es vorgesehen, dass mindestens ein Bremspedalbetätigungs-Grenzwert nach Maßgabe einer erfassten Umsetzzeit vom Fahrpedal zum Bremspedal, einer Umsetzbeschleunigung, einer Rückziehbeschleunigung vom Fahrpedal und/oder einer Vortretbeschleunigung zum Bremspedal, verändert wird, wobei die Umsetzzeit, Umsetzgeschwindigkeit und/oder Umsetzbeschleunigung vorzugsweise durch eine Endstellung eines elektronischen Fahrpedals und den Beginn der Betätigung des Bremspedals erfasst wird. Mittels dieser Parameter ist ein weiterer Hinweis auf eine Notbrems- oder Vollbremssituation ermittelbar.

Der Bremspedalbetätigungs-Grenzwert wird erfindungsgemäß dann verändert, wenn eine Umsetzzeit kleiner 0,2 s, vorzugsweise kleiner 0,1 s, eine Umsetzbeschleunigung größer 200 cm/s², vorzugsweise größer 800 cm/s², eine Rückziehbeschleunigung vom Fahrpedal größer 500 cm/s², vorzugsweise größer 1000 cm/s² und/oder eine Vortretbeschleunigung zum Bremspedal größer 200 cm/s², vorzugsweise größer 1000 cm/s², erfasst wird. Durch diese Grenzwerte kann ein Verdacht auf eine Notbrems- oder Vollbremssituation relativ erkannt werden.

Die Aufgabe wird ebenso dadurch gelöst, dass bei einem Verfahren zur Durchführung eines automatischen Bremsvorgangs, bei dem mindestens eine die Betätigung des Bremspedals repräsentierende Größe ermittelt wird und ein automatischer Bremsvorgang dann ausgelöst wird, wenn mindestens ein Grenzwert (Bremspedalbetätigungs-Grenzwert) der die Betätigung des Bremspedals repräsentierenden Größe überschritten wird, insbesondere mit den zuvor beschriebenen Merkmalen nach der Erfindung, bei dem Einleiten bzw. Durchführen des automatischen Bremsvorgangs eine Erhöhung des Bremsdrucks in mehreren Stufen, vorzugsweise in drei Stufen, durchgeführt wird. Der Ausdruck "Bremsdruck" ist hier sehr weit aufzufassen. Es sind damit erfindungsgemäß auch sämtliche davon ableitbare Größen mitumfasst, wie Bremsmoment, Bremskraft oder Fahrzeugverzögerung, die zu einem Abbremsen des Fahrzeugs aufgrund der Bremsenbetätigung führen. Durch den stufenweisen Bremsdruckaufbau kann ein möglichst effizientes aber ebenso komfortables Auslösen und Regeln des automatischen Bremsvorgangs erfolgen.

Erfindungsgemäß wird ein "Verdacht" auf eine Gefahr- oder Notbremssituationen bzw. auf einen Fahrerwunsch nach einer maximalen Verzögerung und/oder einer kritischen Fahrsituation auf Grundlage mindestens einer Fahreraktion, insbesondere einer erfassten Fahrerfußbewegung, vor einer Betätigung des Bremspedals des betrachteten Bremsvorgangs und/oder vor dem betrachteten Bremsvorgang ermittelt. Der Begriff "Verdacht auf eine Gefahr- oder Notbremssituationen bzw. auf einen Fahrerwunsch nach einer maximalen Verzögerung und/oder eine kritische Fahrsituation" bedeutet nach der Erfindung eine Wahrscheinlichkeit einer Gefahr- oder Notbremssituationen bzw. eines Fahrerwunsches nach einer maximalen Verzögerung und/oder einer kritischen Fahrsituation.

Die Erhöhung des Bremsdrucks wird nach der Erfindung in mehreren Stufen nach Maßgabe der Erkennungswahrscheinlichkeit oder Erkennungsgenauigkeit des Verdachts der Gefahr- oder Notbremssituationen bzw. des Fahrerwunsches nach einer maximalen Verzögerung und/oder der kritischen Fahrsituation durchgeführt. Damit wird die Fahrerunterstützung durch den Bremsassistenten situationsangepasst der vorliegenden Erkennungssituation einer Gefahr oder Notbremsung angepasst, wodurch Komfort und Effizienz erhöht werden.

Nach der Erfindung ist es vorgesehen, dass der Verdacht auf eine Gefahr- oder Notbremssituationen bzw. einen Fahrerwunsch nach einer maximalen Verzögerung und/oder eine kritische Fahrsituation ermittelt wird auf Grundlage mindestens einer Fahreraktion, vorzugsweise der Bewegung eines Fahrerfußes, insbesondere "Bremsfußes"', vor dem Berühren oder einer Betätigung des Bremspedals. Durch die Ermittlung eines Verdachts einer Gefahr- oder Notbremssituationen bzw. eines Fahrerwunsches nach einer maximalen Verzögerung und/oder einer kritischen Fahrsituation vor dem Berühren oder Betätigen des Bremspedals ist eine frühzeitige Anpassung der Fahrerunterstützung möglich.

Es ist nach der Erfindung vorgesehen, dass der Verdacht auf eine Gefahr- oder Notbremssituationen bzw. einen Fahrerwunsch nach einer maximalen Verzögerung und/oder eine kritische Fahrsituation ermittelt wird auf Grundlage einer erfassten Umsetzzeit vom Fahrpedal zum Bremspedal, einer Umsetzbeschleunigung, einer Rückziehbeschleunigung vom Fahrpedal und/oder einer Vortretbeschleunigung zum Bremspedal. Es hat sich gezeigt, dass diese Fahrerfußbewegungen eine Ermittlung des Verdachts ermöglichen.

Der Verdacht auf eine Gefahr- oder Notbremssituationen bzw. ein Fahrerwunsch nach einer maximalen Verzögerung und/oder eine kritische Fahrsituation wird erfindungsgemäß dann ermittelt, wenn eine schnelle Rücknahme des Fahrpedals, vorzugsweise eine Rückziehbeschleunigung vom Fahrpedal größer 500 cm/s², eine schnelle Umsetzbewegung des Fahrerfußes vom Fahrpedal auf das Bremspedal, vorzugsweise eine Umsetzzeit kleiner 0,1 s oder eine Umsetzbeschleunigung größer 800 cm/s², und/oder eine relativ schnelle Annäherung des Fahrerfußes an das Bremspedal, vorzugsweise eine Vortretbeschleunigung zum Bremspedal größer 1000 cm/s², erfasst wird. Es hat sich gezeigt, dass eine sichere Ermittlung des Verdachts ermöglicht wird, wenn diese Grenzwerte berücksichtigt werden.

Nach der Erfindung ist es vorgesehen, dass die Fahrzeugbremsen vorkonditioniert werden durch Überwindung der Lüftspiele und Anlegen der Bremsbeläge an die Bremsscheibe und/öder Trommeln und ggf. Aufbau eines sehr geringen Bremsdrucks von bis zu ca. 2 bar, wenn der Verdacht auf eine Gefahr- oder Notbremssituationen bzw. ein Fahrerwunsch nach einer maximalen Verzögerung und/oder eine kritische Fahrsituation ermittelt wurde, dass der Bremsdruck auf einen niedrigen Druckwert, vorzugsweise auf einen Bremsdruck von ca. 2 bar bis ca. 5 bar, erhöht wird, wenn der Verdacht der Gefahr- oder Notbremssituationen bzw. der Fahrerwunsch nach einer maximalen Verzögerung und/oder die kritische Fahrsituation weiter erkannt wurde, und dass der Bremsdruck auf einen hohen Druckwert, vorzugsweise auf einen maximalen Bremsdruck und insbesondere mit maximaler Bremsdruckaufbaugeschwindigkeit, erhöht wird, wenn aufgrund der durch den Fahrer veranlassten Bremspedalbewegung bzw. Betätigung, insbesondere der Bremspedalgeschwindigkeit und/oder davon abgeleiteter Größen, der Verdacht als bestätigt gilt und eine Gefahr- oder Notbremssituationen bzw. ein Fahrerwunsch nach einer maximalen Verzögerung und/oder eine kritische Fahrsituation erkannt wurde. Damit kann, bei hohem "Bremskomfort" für den Fahrer, eine sichere automatische Bremsung des Fahrzeugs im Sinne eines Bremsassistenten-Eingriffs realisiert werden.

Die Aufgabe wird demnach auch durch ein Verfahren zur Durchführung eines automatischen Bremsvorgangs gelöst, mit den folgenden Schritten:
Erfassen und Bewerten einer Situation vor Betätigung des Bremspedals durch den Fahrer,
Vorkonditionieren der Fahrzeugbremsen, insbesondere Überwindung der Lüftspiele und Anlegen der Bremsbeläge an die Bremsscheibe und/oder Trommeln und ggf. Aufbau eines sehr geringen Bremsdrucks von 1 bis maximal 2 bar, der zu keiner merklichen Fahrzeugverzögerung führt, wenn ein Hinweis oder ein Verdacht auf einen Fahrerwunsch nach einer bestimmten Verzögerung und/oder einer kritischen Fahrsituation erkannt wurde,
weiteres Erfassen und Bewerten einer Situation vor Betätigung des Bremspedals durch den Fahrer,
Aufbringen eines sehr geringen Bremsdrucks, vorzugsweise ca. 2-5 bar, der zu einer sehr geringen, kaum merklichen Fahrzeugverzögerung führt, wenn ein Hinweis oder ein Verdacht auf einen Fahrerwunsch nach einer bestimmten Verzögerung und/oder einer kritischen Fahrsituation weiter erkannt wurde,
Abfühlen bzw. Erfassen und Auswerten der durch den Fahrer veranlassten Pedalbewegung des Bremspedals, insbesondere der Pedalgeschwindigkeit oder davon abgeleiteter Größen, Aufbringen des erhöhten Bremsdrucks mit vorzugsweise maximaler Bremsdruckaufbaugeschwindigkeit, wenn durch die durch den Fahrer veranlasste oder bewirkte Pedalbewegung des Bremspedals ein Fahrerwunsch nach einer maximalen Verzögerung und/oder einer kritischen Fahrsituation erkannt wurde.

Der Bremsdruckaufbau für die automatische Bremsung des Fahrzeugs wird vorzugsweise durch einen aktiven Booster oder mittels einer hydraulischen Pumpe erzeugt. Besonders vorteilhaft findet das erfindungsgemäße Verfahren seine Anwendung bei einer Brake-by-wire-Bremsanlage, bei welcher der Bremsdruck mittels Hilfsenergie erzeugt wird, das Bremspedal mit einem Pedalwegsimulator gekoppelt ist und die Hilfsenergiequelle nach Maßgabe der Bremspedalbetätigung elektronisch gesteuert wird. Bei dieser Bremsanlage ist eine Realisierung des Bremsassistenten im Sinne der Erfindung technisch sehr einfach, sicher und genau möglich durch eine entsprechende Ansteuerung der Hilfsenergiequelle bzw. der Brake-by-wire-Bremsanlage.

Die Erfindung wird nun anhand eines Ausführungsbeispiels näher erläutert.

Zur Verbesserung der Funktion des Bremsassistenz-Systems werden die Grenzwerte oder Schaltschwellen des Bremsassistenten zusätzlich zu einer Abhängigkeit von der Fahrgeschwindigkeit und vom Bremspedalweg auch im Hinblick auf die Fahreraktionen vor dem Berühren des Bremspedals angepasst. Insbesondere werden die Geschwindigkeitsgrenzwerte (Geschwindigkeitsschwellen) des Bremsassistenten herabgesetzt, sobald die Fahreraktionen auf eine Voll- oder Notbremsung hindeuten. Als Fahreraktion, die auf eine Notbremsung hindeuten, werden eine schnelle Rücknahme des Gaspedals, ein schnelles Umsetzen des Fahrerfußes vom Gaspedal auf das Bremspedal und eine schnelle Annäherung des Fahrerfußes an das Bremspedal gewertet. Die Modifikation der Schaltschwellen des Bremsassistenten aufgrund der detektierten Fahreraktion im Vorfeld einer Bremsung ist temporärer Natur. Dabei wird die Modifikation um so geringer, je länger die detektierte Fahreraktion zeitlich zurückliegt. Zur Erkennung der auf eine Notbremsung hindeutenden Fahreraktionen können Annäherungssensoren im Bremspedal, Lichtschranken oder Kameras im Fußraum des Fahrzeugs und mindestens eine Erfassungsvorrichtung für die Gaspedalstellung alternativ und in Kombination eingesetzt werden. Zumindest aber ist eine Erfassungseinrichtung für die unbetätigte Gaspedalstellung vorgesehen. Kostengünstig wird dabei in Fahrzeugen, die mit einem elektronischen Gaspedal (E-Gas) ausgerüstet sind, das bereits vorhandene Signal für die Gaspedalstellung als Zusatzinformation für den erfindungsgemäß verbesserten Bremsassistenten genutzt. Zusätzliche Sensoren, wie Lichtschranken, Annäherungs- und Endlagenschalter, sind bei dieser bevorzugten Konfiguration nicht notwendig.

In einer weiteren erfindungsgemäßen Ausführungsform des Bremsassistenten werden aktiv Bremsungen eingeleitet, bevor der Fahrer das Bremspedal berührt. Dieser entsprechend "erweiterte" Bremsassistent kann in Erwartung einer nachfolgenden Fahrerbremsung eine automatisch ausgelöste Bremsung einleiten, vorzugsweise zunächst mit nur einem geringen Bremsdruck. Im Anschluss daran können sich automatische Bremsung und Fahrerbremsung wie beim bekannten Bremsassistenten überlagern. Als wesentliches Merkmal ist bei dieser Ausführungsform eine abgestufte Intensität der aktiv (automatisch) eingeleiteten Bremsaktionen vorgesehen, wobei die Stufung nach Maßgabe einer geschätzten "Schwere" der erwarteten Notbremssituation, das bedeutet einer erwarteten notwendigen Abbremsungsintensität, und der Wahrscheinlichkeit oder Erkennungssicherheit, z.B. über einen Wahrscheinlichkeitskoeffizienten, variiert wird. Die Einstufung in Abhängigkeit von der Intensität und Erkennungssicherheit wird fortwährend vorgenommen, wobei die Stufung nach Maßgabe der aktuellen Situation in Richtung stärkerer Bremsdruck oder geringerer Bremsdruck möglich ist. Die geschätzte "Schwere" der erwarteten Notbremssituation wird vorzugsweise nach Maßgabe der Gaspedalgeschwindigkeit, der Gaspedalstellung und der Fahrerfußgeschwindigkeit an ausgewählten Messorten im Fußraum sowie anhand der Abhebgeschwindigkeit des Fußes vom Gaspedal, seiner Annäherungsgeschwindigkeit an das Bremspedal und der Umsetzzeit vom Gaspedal auf das Bremspedal ermittelt. Ein Wahrscheinlichkeitskoeffizient gibt dabei an, wie wahrscheinlich die erwartete Notbremssituation ist. Die ermittelten Werte werden gewichtet oder bewertet, indem eine detektierte hohe Annäherungsgeschwindigkeit an das Bremspedal eine größere Erhöhung des Wahrscheinlichkeitskoeffizienten ergibt, als eine detektierte hohe Rückzugsgeschwindigkeit des Fußes vom Gaspedal. Allgemein gilt dabei, dass auf zu erwartende Notbremssituationen hindeutende Ereignisse gegen Ende der Umsetzphase des Fahrerfußes mit höherer Wahrscheinlichkeit tatsächlich eine Notbremsung folgt als auf Ereignisse zu Beginn oder im Vorfeld des Umsetzprozesses. Daher wird der Wahrscheinlichkeitskoeffizient neben der Art der detektierten Ereignisse insbesondere auch nach Maßgabe der Zeitspanne, wie lange die einzelnen Ereignisse bereits zurückliegen, bewertet. Beispielsweise wird eine schnelle Rücknahme des Gaspedals zunächst mit einem bestimmten Wahrscheinlichkeitswert verknüpft, der über der Zeit, in der kein weiteres notbremsrelevantes Ereignis folgt, kontinuierlich oder in Stufen, was für ein Softwareprogramm Vorteile bietet, abnimmt und nach dem Verstreichen einer vorbestimmten Zeit zu Null wird.

Nach einer Intensitäts-Einstufung der aktiv eingeleiteten Bremsaktion wird ein Sollbremsdruck vorgegeben, der von dem erweiterten Bremsassisten z.B. mit Hilfe eines aktiven Vakuumbremskraftverstärkers in einen Ist-Bremsdruck umgesetzt wird. Bei einer mit nur geringer Wahrscheinlichkeit erwarteten Notbremssituation werden die Bremsen zunächst mit einem geringen Druck, beispielsweise 2 bar, beaufschlagt. Dies führt dazu, dass die Bremsbeläge an die Reibflächen der Bremsen angelegt wurden. Das Lüftspiel der Bremsen wird überwunden, wodurch der Fahrer bei der anschließenden Bremsenbetätigung eine vorkonditionierte Bremse mit minimierten Leerwegen vorfindet. Bei hoher Wahrscheinlichkeit der erwarteten Notbremsung kann das Fahrzeug bereits in der Umsetzphase des Fahrerfußes merklich abgebremst werden, wodurch wertvolle Meter an Anhalteweg eingespart werden können.

Durch die Erfindung kann so die Wirksamkeit des Bremsassistenz-Systems erhöht werden. Eine frühere Auslösung und verbesserte Treffschärfe richtig erkannter Notsituationen kann erzielt werden.

Die gestufte automatische Beaufschlagung mit Bremsdruck gemäß der Erfindung wird nun anhand einer Abbildung (Fig.) beispielhaft näher erläutert.

In der Fig. ist die resultierende Fahrzeugverzögerung a gegen die Zeit t aufgetragen für eine allein vom Fahrer ausgelöste Fahrzeugverzögerung F (durchgezogene Linie), eine automatische Fahrzeugverzögerung durch einen idealen Bremsassistenten Ba_{id} (kurzgestrichelte Linie), eine automatische Fahrzeugverzögerung durch einen Bremsassistenten BAₐₗₜ nach dem Stand der Technik (langgestrichelte Linie) sowie eine automatische Fahrzeugverzögerung durch einen erfindungsgemäßen Bremsassistenten BAₙₑᵤ (gestrichpunktete Linie). Das Ereignis, das eine Vollbremsung auslösen soll (kritische Fahrsituation), tritt zum Zeitpunkt t₀ auf. Nach einer bestimmten Reaktionszeit Δ₁ beginnt zum Zeitpunkt t₁ die Bewegung des Fahrpedals, das bedeutet eine Rückbewegung des Fahrpedals. Wenn zu diesem Zeitpunkt bereits der Fahrerwunsch nach einer Vollbremsung erkannt werden könnte, dann könnte der Bremsdruck möglichst rasch, nach einer bestimmten Ansprechzeit der Bremse Δ₂, aufgebaut werden und gemäß der Kurve BA_{id} das Fahrzeug verzögert werden. Die Kurven der Fahrzeugverzögerung durch den Bremsassistenten sind hier und bei den anderen Kurven BAₐₗₜ, BAₙₑᵤ im übrigen schematisch und idealisiert wiedergegeben.

Bei dem herkömmlichen Bremsassistenten kann erst ab dem Zeitpunkt t₃, ab dem eine rasche Bremspedalbetätigung durch den Fahrer und der Bedarf nach maximaler Verzögerung erkannt werden kann, automatisch eine Vollbremsung eingeleitet werden. Zum Bremsdruckaufbau ist zunächst noch die Ansprechzeit der Bremse Δ₃ zu überwinden, um insbesondere bei hydraulischen Anlagen zunächst Bremsflüssigkeitsvolumen zu verschieben, die Lüftspiele zu überwinden und die Bremsbeläge an die Scheibe oder Trommel anzulegen.

Durch die Erfindung wird schon ab dem Zeitpunkt t₁ eine Wahrscheinlichkeit, ein "Verdacht"', auf eine Notbremssituation ermittelt. Daher können hier schon die Lüftspiele überwunden werden und maximal ein so geringer Bremsdruck angelegt werden, der das Fahrzeug für den Fahrer noch nicht spürbar verzögert. Wird aber ab dem Zeitpunkt t₂ der Verdacht auf die Notbremssituation weiter erkannt, d.h. wird eine Notbremssituation weiter wahrscheinlich, dann wird schon ein bestimmter Vordruck, vorzugsweise einige bar Bremsdruck, wie 2 bis 10 bar, vorzugsweise 2 bis 5 bar, insbesondere ca. 3 bar Bremsdruck, aufgebaut, wodurch das Fahrzeug schon merklich -aber nur schwach- verzögert. Ein Abbruch des Bremsdruckaufbaus ist hier aber jederzeit möglich, falls sich der Verdacht als falsch erweist, d.h. falls sich die Wahrscheinlichkeit der Notbremssituation wieder verringert, indem der Fahrer z.B. wieder das Fahrpedal betätigt.

Ist andererseits die Wahrscheinlichkeit einer anschließenden Vollbremsung noch immer relativ hoch, kann schon zu Beginn der Bremspedalbewegung ab dem Zeitpunkt t₃ bei Betätigung des Bremspedals eine Vollbremsung -ausgehend von dem bereits vorhandenen Bremsdruck- eingeleitet werden. Dadurch wird nicht nur die Ansprechzeit der Bremse Δ₃ gespart, sondern es ist schon eine bestimmte Fahrzeugverzögerung erfolgt. Der -wenn auch nur relativ geringe- Bremsdruck hat zwar nur eine relativ geringe Fahrzeugverzögerung zur Folge, aber er hat großen Einfluss auf den Bremsweg. Mit einem derart "vorkonditionierten" Bremssystem kann der Anhalteweg relativ stark verkürzt werden. Wurde die Notsituation für eine Vollbremsung richtig erkannt, dann wird die leichte Fahrzeugverzögerung bis zum Zeitpunkt t₂ durch den Fahrer nicht als eine Komforteinbuße bewertet. Da andererseits durch das erfindungsgemäße Verfahren eine sehr große Sicherheit der Notsituationserkennung vorliegt, wird eine spürbare Fahrzeugverzögerung, auch wenn anschließend keine automatische Vollbremsung oder ein starkes Abbremsen folgt, nur sehr selten, das bedeutet in tolerierbaren Ausnahmefällen, für den Fahrer erkennbar sein.

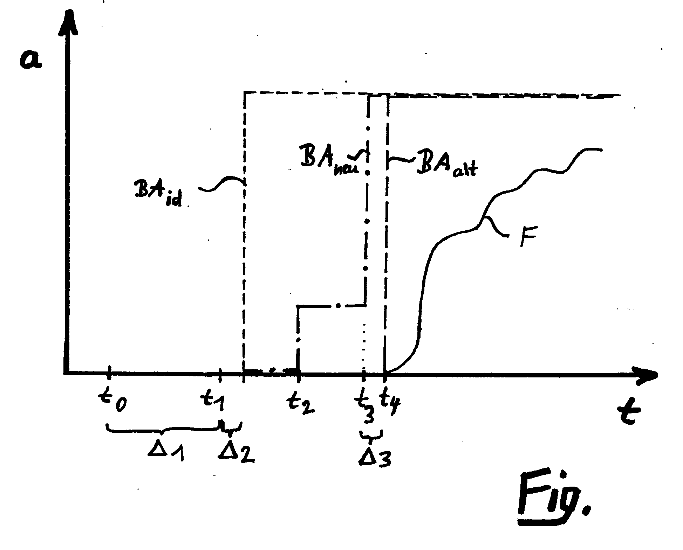

## Patentansprüche

1. Verfahren zur Durchführung eines automatischen Bremsvorgangs, bei dem wenigstens eine die Betätigung des Bremspedals repräsentierende Größe ermittelt wird und ein automatischer Bremsvorgang dann ausgelöst wird, wenn mindestens ein Bremspedalbetätigungs-Grenzwert der die Betätigung des Bremspedals repräsentierenden Größe überschritten wird, wobei der Bremspedalbetätigungs-Grenzwert verändert wird und/oder die die Bremspedalbetätigung repräsentierende Größe gewichtet wird, wobei die Veränderung und/oder die Gewichtungnach Maßgabe einer vor dem betrachteten Bremsvorgang erfassten Fahrerfußbewegung erfolgt, **dadurch gekennzeichnet, dass** dabei zumindest eine, vorzugsweise mehrere, zuvor durchgeführte Normalbremsungen betrachtet werden.

2. Verfahren nach Anspruch 1,
**dadurch gekennzeichnet, dass** als Bremspedalbetätigungs-Grenzwert eine bestimmte Bremspedalkraft, ein Bremspedalweg, eine Bremspedalgeschwindigkeit und/oder eine Bremspedalbeschleunigung, vorzugsweise eine bestimmte Bremspedalgeschwindigkeit und/oder eine davon abgeleitete Größe, verwendet wird.

3. Verfahren nach Anspruch 1 oder 2,
**dadurch gekennzeichnet, dass** als Bremspedalgeschwindigkeits-Grenzwert eine Betätigungsgeschwindigkeit des Bremspedals von größer 50 mm/s, vorzugsweise größer 150 mm/s, vorgegeben wird.

4. Verfahren nach einem der Ansprüche 1 bis 3,
**dadurch gekennzeichnet, dass** wenigstens ein Bremspedalbetätigungs-Grenzwert verändert wird nach Maßgabe wenigstens einer Fahreraktion, insbesondere Fahrerfußbewegung, vor Berührung des Bremspedals.

5. Verfahren nach einem der Ansprüche 1 bis 4,
**dadurch gekennzeichnet, dass** wenigstens ein Bremspedalbetätigungs-Grenzwert nach Maßgabe mindestens einer erfassten Fahrpedalbetätigung, insbesondere einer Fahrpedalrückziehgeschwindigkeit, einer Fahrpedalbeschleunigung, einem Fahrpedalruck, einer Fahrpedalleistung und/oder einer Fahrpedalleistungsänderung, verändert wird.

6. Verfahren nach Anspruch 5,
**dadurch gekennzeichnet, dass** wenigstens ein Bremspedalbetätigungs-Grenzwert verändert wird, wenn eine Fahrpedal-Rückziehgeschwindigkeit größer 20 mm/s, vorzugsweise größer 50 mm/s, eine Fahrpedalbeschleunigung größer 500 mm/s², vorzugsweise größer 1500 mm/s², ein Fahrpedalruck größer 20000 mm/s³, vorzugsweise größer 100000 mm/s³, eine Fahrpedalleistung größer 100000 mm²/s³ und/oder eine Fahrpedalleistungsänderung größer 100000000 mm²/s⁴ erfasst wurde.

7. Verfahren nach einem der Ansprüche 1 bis 6,
**dadurch gekennzeichnet, dass** wenigstens ein Bremspedalbetätigungs-Grenzwert nach Maßgabe einer erfassten Umsetzzeit vom Fahrpedal zum Bremspedal, einer Umsetzbeschleunigung, einer Rückziehbeschleunigung vom Fahrpedal und/oder einer Vortretbeschleunigung zum Bremspedal, verändert wird.

8. Verfahren nach Anspruch 7,
**dadurch gekennzeichnet, dass** wenigstens ein Bremspedalbetätigungs-Grenzwert verändert wird, wenn eine Umsetzzeit kleiner 0,2 s, vorzugsweise kleiner 0,1 s, eine Umsetzbeschleunigung größer 200 cm/s², vorzugsweise größer 800 cm/s², eine Rückziehbeschleunigung vom Fahrpedal größer 500 cm/s², vorzugsweise größer 1000 cm/s² und/oder eine Vortretbeschleunigung zum Bremspedal größer 200 cm/s², vorzugsweise größer 1000 cm/s², erfasst wird.

9. Verfahren nach einem der Ansprüche 1 bis 7,
**dadurch gekennzeichnet, dass** zur Durchführung des automatischen Bremsvorgangs eine Bremsdruckerhöhung in mehreren Stufen, vorzugsweise in drei Stufen, erfolgt.

10. Verfahren nach einem der Ansprüche 1 bis 9,
**dadurch gekennzeichnet, dass** ein Verdacht auf eine Gefahr- oder Notbremssituationen ermittelt wird auf Grundlage einer Fahreraktion, insbesondere einer erfassten Fahrerfußbewegung, vor einer Betätigung des Bremspedals des betrachteten Bremsvorgangs und/oder vor dem betrachteten Bremsvorgang.

11. Verfahren nach Anspruch 10,
**dadurch gekennzeichnet, dass** der automatische Bremsvorgang nach Maßgabe einer Erkennungswahrscheinlichkeit oder Erkennungsgenauigkeit des Verdachts oder der Gefahr- oder Notbremssituationen erfolgt.

12. Verfahren nach Anspruch 11,
**dadurch gekennzeichnet, dass** der Verdacht der Gefahr- oder Notbremssituationen ermittelt wird auf Grundlage einer erfassten Umsetzzeit vom Fahrpedal zum Bremspedal, einer Umsetzbeschleunigung, einer Rückziehbeschleunigung vom Fahrpedal und/oder einer Vortretbeschleunigung zum Bremspedal.

13. Verfahren nach Anspruch 12,
**dadurch gekennzeichnet, dass** der Verdacht der Gefahr- oder Notbremssituationen ermittelt wird, wenn eine schnelle Rücknahme des Fahrpedals, vorzugsweise eine Rückziehbeschleunigung vom Fahrpedal größer 500 cm/s², eine schnelle Umsetzbewegung des Fahrerfußes vom Fahrpedal auf das Bremspedal, vorzugsweise eine Umsetzzeit kleiner 0,1 s oder eine Umsetzbeschleunigung größer 800 cm/s², und/oder eine relativ schnelle Annäherung des Fahrerfußes an das Bremspedal, vorzugsweise eine Vortretbeschleunigung zum Bremspedal größer 1000 cm/s², erfasst wird.

14. Verfahren nach einem der Ansprüche 11 bis 13,
**dadurch gekennzeichnet,**
**dass** die Fahrzeugbremsen vorkonditioniert werden durch Überwindung der Lüftspiele und Anlegen der Bremsbeläge an die Bremsscheibe und/oder Trommeln und ggf. Aufbau eines sehr geringen Bremsdrucks von bis zu ca. 2 bar, wenn der Verdacht der Gefahr- oder Notbremssituationen ermittelt wurde,
**dass** der Bremsdruck auf einen niedrigen Druckwert, vorzugsweise auf einen Bremsdruck von ca. 2 bar bis ca. 5 bar, erhöht wird, wenn der Verdacht der Gefahr- oder Notbremssituationen weiter erkannt wurde,
**dass** der Bremsdruck auf einen hohen Druckwert, vorzugsweise auf einen maximalen Bremsdruck und insbesondere mit maximaler Bremsdruckaufbaugeschwindigkeit, erhöht wird, wenn aufgrund der durch den Fahrer veranlassten oder bewirkten Bremspedalbewegung, insbesondere der Bremspedalgeschwindigkeit und/oder davon abgeleiteter Größen, der Verdacht als bestätigt gilt und eine Gefahr- oder Notbremssituationen als erkannt gilt.

## Claims

1. Method for carrying out an automatic braking action, in which at least one variable representing the activation of the brake pedal is determined and an automatic braking action is triggered when at least one brake pedal activation limiting value of the variable representing the activation of the brake pedal is exceeded, wherein the brake pedal activation limiting value is changed and/or the variable representing the brake pedal activation is weighted, wherein the change and/or the weighting are/is carried out in accordance with a movement of the driver's foot detected before the braking action under consideration, **characterized in that** in this context at least one normal braking operation, preferably a plurality thereof, carried out in advance is considered.

2. Method according to Claim 1, **characterized in that** a certain brake pedal force, a brake pedal travel, a brake pedal speed and/or a brake pedal acceleration, preferably a certain brake pedal speed and/or a variable derived therefrom, are/is used as the brake pedal activation limiting value.

3. Method according to Claim 1 or 2,
**characterized in that** an activation speed of the brake pedal of greater than 50 mm/s, preferably greater than 150 mm/s, is predefined as the brake pedal speed limiting value.

4. Method according to one of Claims 1 to 3, **characterized in that** at least one brake pedal activation limiting value is changed in accordance with at least one driver's action, in particular movement of the driver's foot, before the brake pedal is touched.

5. Method according to one of Claims 1 to 4, **characterized in that** at least one brake pedal activation limiting value is changed in accordance with at least one detected accelerator pedal activation, in particular an accelerator pedal return speed, an accelerator pedal acceleration, an accelerator pedal jolt, an accelerator pedal power and/or a change in accelerator pedal power.

6. Method according to Claim 5,
**characterized in that** at least one brake pedal activation limiting value is changed if an accelerator pedal return speed of greater than 20 mm/s, preferably greater than 50 mm/s, an accelerator pedal acceleration of greater than 500 mm/s², preferably greater than 1500 mm/s², an accelerator pedal jolt of greater than 20 000 mm/s³, preferably greater than 100 000 mm/s³, an accelerator pedal power of greater than 100 000 mm²/s³ and/or a change in accelerator pedal power of greater than 100 000 000 mm²/s⁴ has been detected.

7. Method according to one of Claims 1 to 6, **characterized in that** at least one brake pedal activation limiting value is changed in accordance with a detected transfer time from the accelerator pedal to the brake pedal, a transfer acceleration, a return acceleration from the accelerator pedal and/or a pre-depression acceleration with respect to the brake pedal.

8. Method according to Claim 7,
**characterized in that** at least one brake pedal activation limiting value is changed if a transfer time of less than 0.2 s, preferably less than 0.1 s, a transfer acceleration of greater than 200 cm/s², preferably greater than 800 cm/s², a return acceleration from the accelerator pedal of greater than 500 cm/s², preferably greater than 1000 cm/s² and/or a pre-depression acceleration with respect to the brake pedal of greater than 200 cm/s², preferably greater than 1000 cm/s² is detected.

9. Method according to one of Claims 1 to 7, **characterized in that**, in order to carry out the automatic braking process, an increase in brake pressure occurs in a plurality of stages, preferably in three stages.

10. Method according to one of Claims 1 to 9, **characterized in that** a suspicion of a hazardous situation or emergency braking situation is determined on the basis of a driver's action, in particular a detected movement of the driver's foot, before the brake pedal of the braking action under consideration is activated and/or the braking action under consideration.

11. Method according to Claim 10,
**characterized in that** the automatic braking action takes place in accordance with the detection probability or detection accuracy of the suspicion or of the hazardous situation or emergency braking situation.

12. Method according to Claim 11,
**characterized in that** the suspicion of the hazardous situation or emergency braking situation is determined on the basis of a detected transfer time from the accelerator pedal to the brake pedal, a transfer acceleration, a return acceleration from the brake pedal and/or a pre-depression acceleration with respect to the brake pedal.

13. Method according to Claim 12,
**characterized in that** the suspicion of the hazardous situation or emergency braking situation is determined if a rapid withdrawal of the accelerator pedal, preferably a return acceleration of the accelerator pedal of greater than 500 cm/s², a rapid transfer movement of the driver's foot from the accelerator pedal to the brake pedal, preferably a transfer time of less than 0.1 s or a transfer acceleration of greater than 800 cm/s² and/or a relatively rapid approach of the driver's foot to the brake pedal, preferably a pre-depression acceleration with respect to the brake pedal of greater than 1000 cm/s², is detected.

14. Method according to one of Claims 11 to 13,
**characterized in that** the vehicle brakes are preconditioned by overcoming the clearance and applying the brake linings to the brake disc and/or drums and, if appropriate, building up of a very low brake pressure of up to approximately 2 bar if the suspicion of the hazardous situation or emergency braking situation has been determined,
**in that** the brake pressure is increased to a low pressure value, preferably to a brake pressure of approximately 2 bar to approximately 5 bar if the suspicion of the hazardous situation or emergency braking situation has been detected further,
**in that** the brake pressure is increased to a high pressure value, preferably to a maximum brake pressure and, in particular with a maximum brake pressure build-up speed, if the suspicion is found to be confirmed and a hazardous situation or emergency braking situation is detected on the basis of the brake pedal movement which is brought about by the driver, in particular the brake pedal speed and/or variables derived therefrom.

## Revendications

1. Procédé pour réaliser une opération automatique de freinage, dans lequel au moins une grandeur qui représente l'actionnement de la pédale de frein est déterminée et une opération automatique de freinage est déclenchée si au moins une valeur limite d'actionnement de la pédale de frein de la grandeur qui représente l'actionnement de la pédale de frein est dépassée,
la valeur limite d'actionnement de la pédale de frein étant modifiée et/ou la grandeur représentant l'actionnement de la pédale de frein étant pondérée,
la modification et/ou la pondération s'effectuant en fonction d'un déplacement du pied du conducteur saisi avant l'opération de freinage considérée, **caractérisé en ce que**
au moins un et de préférence plusieurs freinages normaux exécutés préalablement sont pris en compte dans le procédé.

2. Procédé selon la revendication 1, **caractérisé en ce qu'**il utilise comme valeur limite de l'actionnement de la pédale de frein une force définie exercée sur la pédale de frein, une course de la pédale de frein, une vitesse de la pédale de frein et/ou une accélération de la pédale de frein, de préférence une vitesse définie de la pédale de frein et/ou une grandeur qui en est dérivée.

3. Procédé selon les revendications 1 ou 2, **caractérisé en ce qu'**une vitesse d'actionnement de la pédale de frein supérieure à 50 mm/s et de préférence supérieure à 150 mm/s est prédéterminée comme valeur limite de la vitesse de la pédale de frein.

4. Procédé selon l'une des revendications 1 à 3, **caractérisé en ce qu'**au moins une valeur limite d'actionnement de la pédale de frein est modifiée en fonction d'au moins une réaction du conducteur, en particulier un déplacement du pied du conducteur, avant qu'il touche la pédale de frein.

5. Procédé selon l'une des revendications 1 à 4, **caractérisé en ce qu'**au moins une valeur limite d'actionnement de la pédale de frein est modifiée en fonction d'au moins un actionnement détecté de la pédale d'accélérateur, en particulier une vitesse de retrait de la pédale d'accélérateur, une accélération de la pédale d'accélérateur, un recul de la pédale d'accélérateur, la puissance exercée sur la pédale d'accélérateur et/ou une modification de la puissance exercée sur la pédale d'accélérateur.

6. Procédé selon la revendication 5, **caractérisé en ce qu'**au moins une valeur limite d'actionnement de la pédale de frein est modifiée lorsqu'il a été détecté que la vitesse de retrait de la pédale d'accélérateur est supérieure à 20 mm/s, de préférence supérieure à 50 mm/s, que l'accélération de la pédale d'accélérateur est supérieure à 500 mm/s², de préférence supérieure à 1 500 mm/s², que le recul de la pédale d'accélérateur est supérieur à 20 000 mm/s³, de préférence supérieur à 100 000 mm/s³, que la puissance exercée sur la pédale d'accélérateur est supérieure à 100 000 mm²/s³ et/ou que la modification de la puissance exercée sur la pédale d'accélérateur est supérieure à 100 000 000 mm²/s⁴.

7. Procédé selon l'une des revendications 1 à 6, **caractérisé en ce qu'**au moins une valeur limite de l'actionnement de la pédale de frein est modifiée en fonction de la durée détectée du passage de la pédale d'accélérateur à la pédale de frein, d'une accélération de ce passage, d'une accélération du retrait de la pédale d'accélérateur et/ou d'une accélération antérieure en direction de la pédale de frein.

8. Procédé selon la revendication 7, **caractérisé en ce qu'**au moins une valeur limite de l'actionnement de la pédale de frein est modifiée lorsque la durée de passage détectée est inférieure à 0,2 s, de préférence inférieure à 0,1 s, lorsque l'accélération détectée du passage est supérieure à 200 cm/s², de préférence supérieure à 800 cm/s², lorsque l'accélération détectée du retrait de la pédale d'accélérateur est supérieure à 500 cm/s² et de préférence supérieure à 1 000 cm/s² et/ou lorsqu'une accélération antérieure détectée en direction de la pédale de frein est supérieure à 200 cm/s² et de préférence supérieure à 1 000 cm/s².

9. Procédé selon l'une des revendications 1 à 7, **caractérisé en ce qu'**en vue d'exécuter l'opération automatique de freinage, une augmentation de la pression de freinage a lieu en plusieurs étapes et de préférence en trois étapes.

10. Procédé selon l'une des revendications 1 à 9, **caractérisé en ce qu'**un pressentiment de situation de danger ou de freinage d'urgence est détectée sur la base d'une réaction du conducteur, en particulier d'un déplacement détecté du pied du conducteur, avant l'actionnement de la pédale de frein de l'opération de freinage considérée et/ou avant l'opération de freinage considérée.

11. Procédé selon la revendication 10, **caractérisé en ce que** l'opération automatique de freinage a lieu en fonction d'une probabilité de détection ou d'une précision de détection du pressentiment d'une situation de danger ou de freinage d'urgence.

12. Procédé selon la revendication 11, **caractérisé en ce que** le pressentiment d'une situation de danger ou de freinage d'urgence est déterminé sur la base de la durée détectée de passage de la pédale d'accélérateur à la pédale de frein, d'une accélération de ce passage, d'une accélération du retrait de la pédale d'accélérateur et/ou d'une accélération antérieure en direction de la pédale de frein.

13. Procédé selon la revendication 12, **caractérisé en ce que** le pressentiment d'une situation de danger ou de freinage d'urgence est déterminée si une reprise rapide de la pédale d'accélérateur, de préférence une accélération du retrait de la pédale d'accélérateur est supérieure à 500 cm/s² est détectée, si un déplacement rapide de passage du pied du conducteur de la pédale d'accélérateur à la pédale de frein, de préférence une durée de passage inférieure à 0,1 s ou une accélération de passage supérieure à 800 cm/s², est détectée et/ou si une approche relativement rapide du pied du conducteur vers la pédale de frein, de préférence une accélération préalable en direction de la pédale de frein supérieure à 1 000 cm/s², est détectée.

14. Procédé selon l'une des revendications 11 à 13, **caractérisé en ce que** les freins du véhicule sont pré-conditionnés en surmontant les interstices et la pose des garnitures de frein sur le disque de frein et/ou les tambours de freins et éventuellement établissement d'une très légère pression de freinage, qui peut atteindre environ 2 bars, lorsque le pressentiment d'une situation de danger ou de freinage d'urgence a été déterminé, **en ce que** la pression de freinage est augmentée à une valeur basse de pression, de préférence à une pression de frein d'environ 2 bars à environ 5 bars si le pressentiment d'une situation de danger ou de freinage d'urgence a été détecté, **en ce que** la pression de freinage est augmentée à une haute valeur de pression, de préférence à une pression maximale de freinage et en particulier à la vitesse maximale d'établissement de la pression de freinage si, sur la base du déplacement de la pédale de frein lancé par le conducteur ou effectué par le conducteur, en particulier de la vitesse de la pédale de frein et/ou de grandeurs qui en sont dérivées, le pressentiment est considéré comme constaté et une situation de danger ou de freinage d'urgence est considérée comme détectée.
